# DEMANDE DE BREVET EUROPEEN

(11) **EP 1 614 833 A1**
(43) Date de publication de la demande: **11.01.2006**
(21) Numéro de dépôt: 05364020.7
(22) Date de dépôt: 07.07.2005
(51) Int. Cl.: E04H 4/10, A01C 3/02

(54) **Système de bache pour bassin et installation équipée d'un tel système**

(30) Priorité: 08.07.2004 FR 0407663
(71) Demandeur: CGM - Couverture Generale Management, 85170 Belleville Sur Vie (FR)
(72) Inventeur: Garcia, Reynald c/o Rero, 95410 Groslay (FR)
(74) Mandataire: Larcher, Dominique

(57) **Abrégé**

L'invention concerne un système de bâche pour bassin (1) incluant au moins une bâche et des moyens de mise en tension de ladite bâche au-dessus dudit bassin caractérisé en ce que lesdits moyens de mise en tension incluent une pluralité de moyens (3) formant tambours ou parties de tambours rotatifs présentant chacun un tambour (4) ou une partie de tambour muni(e) de moyens de coopération avec au moins une partie du pourtour de ladite bâche et des moyens (5) de mise en rotation dudit tambour ou de ladite partie de tambour.

## Description

L'invention concerne le domaine de la conception et de la réalisation des systèmes de bâche destinés à recouvrir tout type de bassin.

De tels bassins peuvent notamment être constitués par des bassins recueillant des effluents tels que, par exemple et non exclusivement, des fosses à lisier ou des bassins de traitement des eaux usées. Toutefois, la présente invention pourra trouver son application pour d'autres types de bassins (piscines, puits, citernes, etc.) dès lors que ceux-ci devront être équipés d'un système de bâche les recouvrant.

On notera que la présente invention concerne tout type de formes de bassins, ceux-ci pouvant être indifféremment de forme circulaire, de forme carrée ou rectangulaire notamment.

L'objectif principal de tels systèmes de bâches recouvrant les bassins est d'isoler le contenu de ceux-ci.

Dans le cas des bassins contenant des effluents, l'objectif principal de tels systèmes est ainsi, notamment, de limiter la diffusion des mauvaises odeurs émanant de leur contenu afin de supprimer ou à tout le moins de limiter, les nuisances en résultant.

Un objectif parallèle de ces systèmes est aussi de limiter l'accès à l'intérieur de ces bassins afin de sécuriser ceux-ci.

Les bâches de tels systèmes sont généralement constituées d'un matériau plastique souple étanchéifié. Elle peuvent être essentiellement coniques ou essentiellement planes.

De telles bâches doivent être tendues pour éviter l'accumulation d'eau de pluie en des zones de leur surface, accumulation qui pourrait nuire à leur intégrité. Lorsqu'elles présentent une forme conique, cette eau de pluie est évacuée vers leur périphérie. Lorsqu'elles sont planes, l'évacuation de l'eau de pluie est généralement organisé grâce à un orifice relié à une canalisation d'évacuation.

Quelle que soit leur forme, ces bâches coopèrent généralement, directement ou par l'intermédiaire d'une jupe, avec les parois latérales du bassin de façon telle qu'une certaine étanchéité soit assurée entre l'extérieur et le contenu de celui-ci, de façon notamment à éviter les nuisances liées à la nature de ce contenu.

Différents systèmes de bâches destinés à recouvrir des bassins sont connus de l'art antérieur.

Selon une première approche, les bâches de tels systèmes sont constituées par une couverture essentiellement conique montée sur une structure de support présentant un mât central prenant appui sur le fond du bassin.

Un exemple de système de ce type est notamment décrit dans la demande de brevet français FR2701348 qui divulgue une couverture pour fosse à lisier avec un mât central reposant sur le fond de la fosse, ce mât supportant une bâche fixée sur les bords du bassin.

Afin d'assurer l'étanchéité entre les parois latérales du bassin et la bâche, le système selon FR2701348 est pourvu de moyens de mise en tension de la bâche montés sur la paroi extérieure du bassin et d'une bavette intérieure disposée au niveau de la jonction entre la bâche et la partie supérieure du muret périphérique constituant la paroi latérale du bassin.

Les moyens de mise en tension comprennent des sangles élastiques reliées par l'une de leurs extrémités à la bâche et à l'autre de leurs extrémités à des moyens d'accrochage scellés dans la paroi extérieure du muret périphérique. Ces sangles sont pourvues d'un moyen tendeur. La bâche est pourvue sur son bord périphérique d'une pluralité de passants qui accueillent une armature rigide pouvant être constituée par un tube cintré ou par un jonc périphérique soudé au bord périphérique de la bâche. Cette armature est reliée aux sangles citées ci-dessus.

Un inconvénient suscité par le système de bâche du type décrit dans la demande de brevet FR2701348 réside dans le fait que les moyens de mise en tension de la bâche qu'il propose sont adaptés à une dimension précise de taille de bassin. Or, de la conception à la réalisation de tels bassins, des différences de taille peuvent survenir lors de la réalisation du génie civil associée à leur construction. Si le bassin est plus petit ou plus grand que prévu, la bâche ne pourra pas être correctement tendue par les moyens de mise en tension.

Ce type de solution de systèmes de bâches de l'art antérieur présente aussi l'inconvénient de proposer une charpente dont certains des éléments sont en contact avec le liquide contenu dans le bassin. Or, ce liquide peut présenter des caractéristiques physiques ou chimiques susceptibles d'altérer l'intégrité de ces éléments structurels de la charpente et donc à plus ou moins long terme la détérioration de celle-ci.

Pour résoudre cet inconvénient, il a été proposé selon une deuxième approche, de solidariser la structure supportant la bâche non pas au fond du bassin mais à l'extérieur de celui-ci. Ainsi, cette structure n'est plus du tout en contact avec le liquide présent dans le bassin et peut présenter une plus grande longévité.

La demande de brevet FR2702330 présente un système de couverture de fosse à lisier incluant une bâche essentiellement conique reliée aux parois périphériques du bassin et dont l'apex est supporté par une structure incluant des pieds répartis autour du bassin. Le système inclut également un câble relié à l'extrémité de l'apex de la bâche pour tendre plus ou moins celle-ci grâce à un enrouleur.

Les moyens de mise en tension de la bâche proposés dans cette demande de brevet français FR2702330 présentent l'inconvénient de ne permettre qu'une tension par l'apex de la bâche et non une tension par sa périphérie. En conséquence, il est difficile d'éviter la formation de plis dans la bâche et donc un écoulement inégal des eaux de pluie sur sa surface concourrant à l'accélération de son usure. Ce type de système de couverture de bassin est de plus relativement complexe, et donc coûteux, à réaliser et à installer.

Selon une troisième approche, il a également été proposé dans l'état de la technique des systèmes de bâche pour bassin présentant une bâche essentiellement plane. Ce type de bâche est généralement équipé d'un système permettant l'évacuation des eaux de pluie recueillies par la bâche, système qui comprend généralement un orifice central relié à des moyens d'évacuation vers l'extérieur de l'eau recueillie. Un tel système de bâche est notamment décrit dans la demande de brevet français FR2752142.

La technique décrite dans ce document met en oeuvre une mise en tension de la bâche grâce à un sandow et une drisse coulissant dans des oeillets prévus à la périphérie de la bâche.

De telles caractéristiques ne permettent pas une mise en tension efficace de la bâche. En effet, le sandow périphérique ne permet pas d'empêcher la formation de plis et de poches dans lesquelles l'eau de pluie peut s'accumuler.

Ce sandow peut, de plus, se détériorer dans le temps et ne plus remplir efficacement sa fonction

Enfin, un tel système ne peut s'adapter à des bassins de tailles légèrement variables.

Tous les systèmes de bâche connus de l'art antérieur présentent en effet l'inconvénient de nécessiter un relevé géométrique précis du site d'implantation du bassin et des études techniques approfondies pour réaliser un bassin présentant la taille et la forme précises souhaitées. En effet, ces systèmes associent une taille de bâche donnée à une taille de bassin donnée. Quasiment aucune tolérance ne peut être autorisée sur la taille du bassin pour permettre à la bâche prévue de s'adapter dessus.

Les éléments de charpente des systèmes de l'art antérieur présentent par ailleurs souvent des dimensions importantes. La logistique correspondante de transport et de montage de ces systèmes s'en trouve complexifiée.

On notera également que les règles de l'art métallo-textile précisent qu'une toile ou une bâche doit être périodiquement re-tendue. Or, les dispositifs de tension de bâche des systèmes connus de l'art antérieur sont généralement complexes à mettre en oeuvre et nécessitent l'intervention de personnels spécialisés.

Un objectif de la présente invention est de proposer un système de bâche destiné à équiper tout type de bassin présentant des moyens efficaces de mise en tension de la bâche.

Notamment, un objectif de la présente invention est de proposer un tel système qui permette de répartir de façon essentiellement uniforme les forces de tension exercées par les moyens de mise en tension de la bâche.

Un autre objectif de la présente invention est de proposer un tel système qui permette d'adapter une bâche de taille donnée à des bassins de tailles légèrement variables. En d'autres termes, un objectif de la présente invention est de s'affranchir de la nécessité citée ci-dessus, inhérente à l'art antérieur, d'effectuer des études techniques complexes et/ou des relevés géométriques précis nécessaires à l'obtention d'un système incluant une bâche qui s'adapte correctement sur le bassin qu'elle équipe. Encore un autre objectif de la présente invention est de proposer un tel système qui assure une bonne étanchéité entre le contenu du bassin et l'extérieur.

Un objectif de la présente invention est aussi de décrire un tel système qui soit facile à mettre en oeuvre et qui ne nécessite pas l'intervention obligatoire de personnel spécialisé, notamment pour re-tendre la bâche lorsque cela s'avère nécessaire

Encore un objectif de la présente invention est de proposer un tel système qui puisse être utilisé pour tout type de bâche, que celle-ci soit plane ou non.

Egalement un objectif de l'invention est de proposer un tel système susceptible d'être plus aisé à transporter et à monter que les systèmes de l'art antérieur.

Ces objectifs, ainsi que d'autres qui apparaîtront par la suite, sont atteints grâce à l'invention qui concerne un système de bâche pour bassin incluant au moins une bâche et des moyens de mise en tension de ladite bâche au-dessus dudit bassin caractérisé en ce que lesdits moyens de mise en tension incluent une pluralité de moyens formant tambours ou parties de tambours rotatifs présentant chacun un tambour ou une partie de tambour muni(e) de moyens de coopération avec au moins une partie du pourtour de ladite bâche et des moyens de mise en rotation dudit tambour ou de ladite partie de tambour.

On notera que l'on entend dans le cadre de la présente demande de brevet, les termes « partie de tambour » comme visant un élément longitudinal présentant une section transversale en arc de cercle et ne montrant donc l'aspect d'un tambour que sur une partie de sa section. Une telle partie de tambour peut permettre l'enroulement de la bâche sur cette partie de section.

La présente invention propose donc la mise en oeuvre d'une pluralité de tambours ou parties de tambour rotatifs constituant des surfaces d'enroulement du pourtour la bâche. La bâche, coopérant sur au moins une partie de son pourtour avec ces tambours ou parties de tambour, peut ainsi être mise en tension en agissant sur les moyens de mise en rotation de ceux-ci.

L'invention préconisant l'utilisation d'une pluralité de tambours ou parties de tambour rotatifs, et chaque tambour ou partie de tambour étant équipé(e) de moyens de mise en rotation, il est ainsi possible de répartir les forces de tension sur la bâche.

De plus, en enroulant plus ou moins la bâche sur lesdits tambours ou parties de tambours il est possible de modifier sa surface effective (c'est-à-dire sa surface de recouvrement du bassin qu'elle équipe) et ainsi de lui permettre de s'adapter à des tailles de bassin variables. Ceci se révèle particulièrement avantageux lorsque la taille du bassin réalisé est quelque peu différente des dimensions prévues lors de la conception sur plans.

Le système selon l'invention permet donc de s'affranchir d'études techniques poussées et de relevés géométriques précis lors de la réalisation des bassins et autorise au contraire la réalisation des bassins d'après des mesures simples. En effet, le système selon l'invention permet d'enrouler plus ou moins le pourtour de la bâche et permet ainsi de faire varier la surface effective de celle-ci, c'est-à-dire la surface couvrant effectivement le bassin. Le fait que les bassins destinés à être équipés du système selon l'invention présentent, une fois réalisés, des dimensions différentes de celles initialement prévues ne constituent alors plus un problème.

Le système selon l'invention peut ainsi être calculé sur principe bâtiment.

Le système selon l'invention présente en conséquence l'avantage de pouvoir être préfabriqué en usine et de venir s'adapter facilement sur les bassins.

Il présente aussi l'avantage de pouvoir être facilement transporté.

On notera que, dans le cadre de la présente invention, il pourra être envisagé de ne prévoir les moyens de mise en tension que sur une partie du pourtour de la dite bâche. Par exemple, dans le cadre d'un système mettant en oeuvre une bâche carrée ou rectangulaire, les moyens de mise en tension selon l'invention pourront ainsi être prévus sur un, deux, trois côtés seulement, le ou les autres côtés étant alors simplement fixés au bassin ou à un élément extérieur à celui-ci.

D'une façon préférentielle toutefois, les moyens formant tambours ou parties de tambours rotatifs et constituant les moyens de mise en tension de la bâche selon la présente invention sont répartis, avantageusement essentiellement uniformément, sur tout le pourtour de la bâche. De cette manière, il est possible de répartir de façon essentiellement uniforme les forces de tension sur la bâche. Une telle répartition uniforme permet d'augmenter la durée de vie de celle-ci et son efficacité.

On pourra prévoir différents moyens de coopération des tambours ou parties de tambours avec le pourtour de la bâche. De tels moyens pourront par exemple inclure des moyens d'accrochage de ce pourtour ou partie de pourtour de la bâche sur ces tambours ou parties de tambours. De tels moyens d'accrochage pourront être de différents types (boutons-pression, clips, fermeture à glissière). Toutefois, selon une variante préférée, chaque tambour ou partie de tambour est pourvu(e) d'au moins une gorge longitudinale apte à recevoir ladite au moins une partie du pourtour de ladite bâche.

Egalement préférentiellement, ledit pourtour de ladite bâche est pourvu d'au moins un jonc, ou moyen équivalent, conçu pour coopérer avec ladite au moins une gorge longitudinale. Un tel jonc pourra par exemple être glissé dans un passage ou dans des oeillets prévus sur le pourtour de ladite bâche. Un moyen équivalement pourra par exemple être constitué par une surépaisseur du pourtour de la bâche, réalisée dans le matériau même de celui constituant celle-ci (PVC par exemple) ou dans un autre matériau.

Les moyens de mise en rotation de chaque tambour ou partie de tambour permettant l'enroulement du pourtour de la bâche et, ainsi la mise en tension de celle-ci, pourront également être réalisés sous différentes formes. Selon une variante préférentielle, ces moyens incluent un dispositif à rochet et cliquet. Un tel dispositif, présente l'avantage de pouvoir appliquer une force de tension maximale sur le pourtour de la bâche, sans l'excéder, et donc de ménager l'intégrité de cette bâche.

Les moyens de mise en tension de la bâche préconisés dans le cadre de la présente invention pourront être fixés sur des éléments, par exemple des potences prévus à l'extérieur du bassin et non reliés à celui-ci. Cependant, selon une variante préférentielle, le système selon l'invention comprend des moyens de fixation desdits moyens de mise en tension de ladite bâche sur le bassin qu'il équipe. Préférentiellement de tels moyens de fixation seront prévus sur la paroi extérieure du bassin ou sur le rebord de celui-ci, ceci afin d'empêcher leur mise en contact avec le contenu du bassin qui, comme déjà indiqué, peut être suffisamment corrosif pour entraîner la détérioration des éléments qui sont en contact avec lui.

Ces moyens de fixation pourront se présenter sous diverses formes.

Ainsi, selon une variante, ils pourront être constitués de platines pouvant par exemple être fixées sur la paroi extérieure du bassin ou sur le rebord de celui-ci.

Selon une autre variante, ces moyens de fixation incluent une pluralité de potelets. Une extrémité de ces potelets pourra être fixée à la paroi extérieure du bassin ou rebord de celui-ci tandis que l'autre extrémité pourra accueillir les extrémités de deux tambours ou parties de tambours.

La présente invention présente ainsi également l'avantage de permettre une fixation du système de bâche sur le bassin en renvoyant des efforts faibles sur la structure constituant celui-ci. Le système selon l'invention peut, de ce fait, être installé sur des bassin de piètre qualité tout en s'affranchissant des risques de détérioration majeure d'un tel bassin qui pourraient entraîner une grave pollution.

L'utilisation de potelets articulés permet par ailleurs de pouvoir rapprocher plus ou moins les tambours du bassin et ainsi de jouer sur la surface effective de la bâche.

Comme déjà indiqué, la présente invention, pourra être mise en oeuvre pour tout type de taille ou de forme de bâches, notamment plane ou conique, carrée, rectangulaire, circulaire, etc.

Selon une variante préférentielle, le pourtour de ladite bâche présente des entailles délimitant des portions de pourtour coopérant avec les encoches desdits tambours ou parties de tambour. De telles entailles permettent de faciliter la coopération entre le pourtour ou la partie de pourtour de la bâche avec les moyens de coopération des moyens formant tambour ou partie de tambour. Notamment, lorsque ces moyens incluent des gorges longitudinales, ces entailles facilitent l'introduction des portions de pourtour dans celles-ci.

La présente invention couvre donc toute bâche spécialement conçue pour être intégrée dans un système de bâche tel que décrit ci-dessus.

Notamment, l'invention couvre toute bâche qui présente des entailles sur son pourtour délimitant des portions de pourtour de bâche.

Avantageusement, la présente invention concerne une bâche caractérisée en ce que chaque portion de pourtour de bâche présente un jonc ou un moyen équivalent (surépaisseur par exemple).

La présente invention couvre également toute installation constituée d'un bassin et d'un système de bâche tel que décrit ci-dessus.

D'une façon préférentielle, les moyens formant tambours ou parties de tambours rotatifs sont prévus essentiellement parallèlement au pourtour ou à une partie du pourtour dudit bassin.

Notamment, l'invention couvre une telle installation incluant des moyens de fixation des moyens de mise en tension de la bâche fixés sur la paroi extérieure ou sur le rebord dudit bassin. Comme déjà indiqué, ces moyens de fixation pourront être constitués de platines fixées préférentiellement sur la paroi extérieure du bassin ou encore de potelets dont l'une des extrémités sera préférentiellement fixée à la paroi extérieure du bassin et dont l'autre extrémité accueillera une ou deux extrémités de moyens formant tambour ou partie de tambour.

Selon un mode de réalisation intéressant, lesdits potelets seront montés articulés sur ledit bassin.

Enfin, on notera que le rebord dudit bassin est préférentiellement équipé d'un élément de protection (tel que par exemple un boudin) visant à proscrire l'usure de la bâche par frottement sur le rebord du bassin et pouvant de plus concourir à l'isolation du contenu du bassin de l'extérieur.

L'invention sera mieux comprise grâce à la description qui va suivre de modes non limitatifs de réalisation de celle-ci donnés en référence aux dessins dans lesquels :
- la figure 1 représente une vue en perspective d'une installation incluant un bassin circulaire et équipée d'un premier mode de réalisation du système selon la présente invention (la bâche n'étant pas représentée pour des besoins de clarté de la description) ;
- la figure 2 représente une vue en perspective éclatée d'un détail de la figure 1 montrant une partie des moyens de mise en tension de la bâche ;
- la figure 3 représente un mode de réalisation d'une bâche spécialement conçu pour être adapté au mode de réalisation de la présente invention selon la figure 1, ladite bâche étant représentée en vue de dessus ;
- la figure 4 représente une vue selon la coupe partielle AA' de la bâche représentée à la figure 3 ;
- la figure 5 représente une vue en coupe partielle de l'installation représentée à la figure 1 ;
- la figure 6 représente une vue éclatée des différents éléments du dispositif à rochet et cliquet des moyens de mise en rotation des tambours (à gauche vue de côté du rochet, au centre vue de face du rochet, à droite vue du cliquet) ;
- les figure 7 est une vue en coupe longitudinale d'un tambour 4 ;
- la figure 8 est une vue de l'axe de rotation d'un tambour 4 ;
- la figure 9 est une vue en coupe transversale d'un tambour 4 ;
- les figures 10 et 11 représentent un autre mode de réalisation des tambours 4 ;
- la figure 12 représente un autre mode de réalisation des potelets 11 ;
- la figure 13 représente une vue en coupe d'une partie de tambour pouvant être mise en oeuvre dans le cadre de la présente invention ;
- la figure 14 représente une vue en coupe d'une installation incluant un bassin rectangulaire et équipée d'un second mode de réalisation du système selon la présente invention ;
- la figure 15 représente une vue en coupe partielle CC' de l'installation représentée à la figure 14 ;
- La figure 16 représente un mode de réalisation d'une bâche spécialement conçu pour être adapté au mode de réalisation de la présente invention selon la figure 14, ladite bâche étant représentée en vue de dessus.

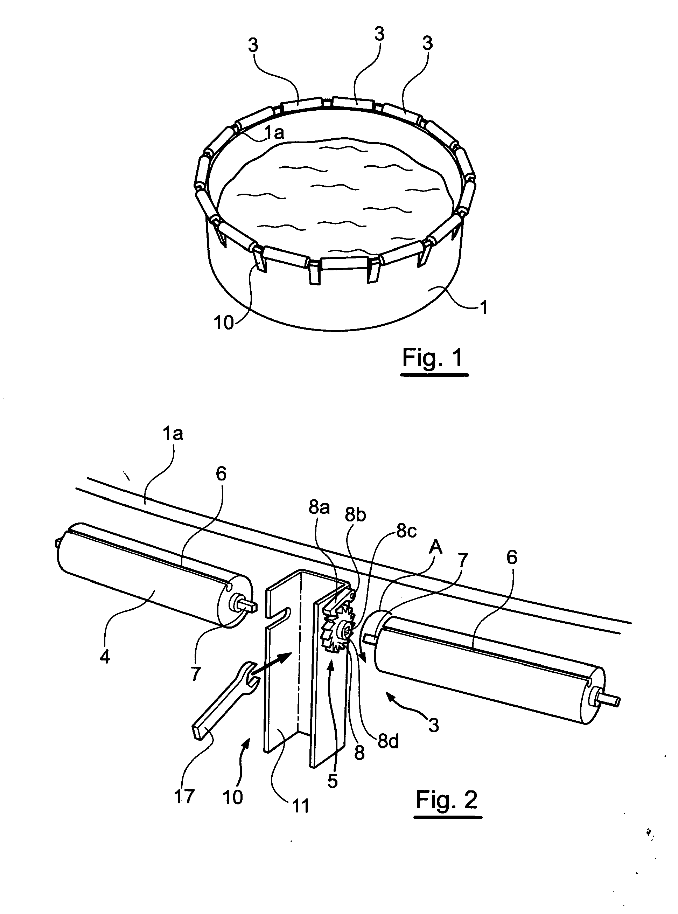

Selon la figure 1, un bassin 1 constitué dans le cadre du présent exemple de réalisation par une fosse à lisier, est équipé d'un système de bâche selon la présente invention. Pour des besoins de clarté, cette installation est représentée avant le positionnement de la bâche.

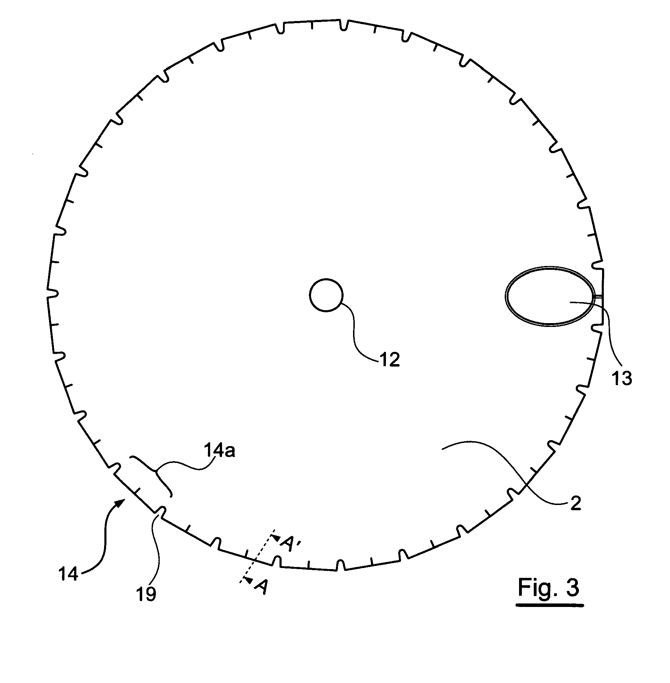

Le système de bâche, outre cette bâche non représentée sur la figure 1 mais représentée en figure 3, comprend des moyens de mise en tension de celle-ci au-dessus du bassin. Ceux-ci incluent une pluralité de moyens 3 formant tambour. Ces moyens sont répartis essentiellement uniformément sur l'ensemble du pourtour la du bassin 1.

En référence à la figure 2, ces moyens 3 formant tambour présentent chacun un tambour 4.

Ces moyens 3 formant tambour sont disposés de façon telle que les tambours soient prévusde façon essentiellement parallèle (tangentielle) au pourtour du bassin circulaire 1.

Les moyens 3 de mise en tension de la bâche incluent également, chacun, des moyens 5 permettant de mettre en rotation le tambour 4 qui lui est associé.

Conformément à la présente invention, chaque tambour 4 est équipé d'une gorge longitudinale 6.

Dans le mode de réalisation représenté, les tambours 4 sont montés sur des axes 7 de section carrée qui leur sont solidaires, aptes à coopérer avec le rochet 8 d'un dispositif, à cliquet 8a et rochet 8 constituant les moyens 5 de mise en rotation de chaque tambour 4.

Chaque rochet 8 est monté rotatif et présente une lumière 8c d'une section (en l'occurrence carrée) lui permettant de coopérer avec l'extrémité d'un axe 7 d'un tambour pour entrâiner celui-ci. Chaque rochet présente par ailleurs une partie formant saillie 8d pouvant coopérer avec un outil 17.

Un cliquet 8a monté pivotant à une de ses extrémités 8b présente à l'autre de ses extrémités une dent permettant de coopérer avec le rochet 8 pour retenir le tambour en position.

Grâce à un outil 17, il est possible d'agir sur la parti 8d du rochet 8 pour faire tourner le tambour 4 associé selon la flèche A. La position adoptée par le tambour est alors maintenue par le cliquet 8a. Il est ainsi possible d'enrouler sur les tambours une largeur plus ou moins élevée du pourtour de la bâche et ainsi de tendre celle-ci. En relevant le cliquet 8a de chaque moyen 5 pour le désolidariser du rochet associé 8, il est possible faire tourner dans le sens inverse de celui indiqué par la flèche A et ainsi de détendre la bâche.

Les moyens de mise en tension de la bâche sont fixés au bassin par des moyens de fixation 10 incluant des potelets 11, dont l'extrémité inférieure est fixée au bassin, et dont l'extrémité supérieure accueille l'axe longitudinal 7 de deux tambours 4, ainsi que les moyens de mise en rotation 5 de l'un d'entre eux.

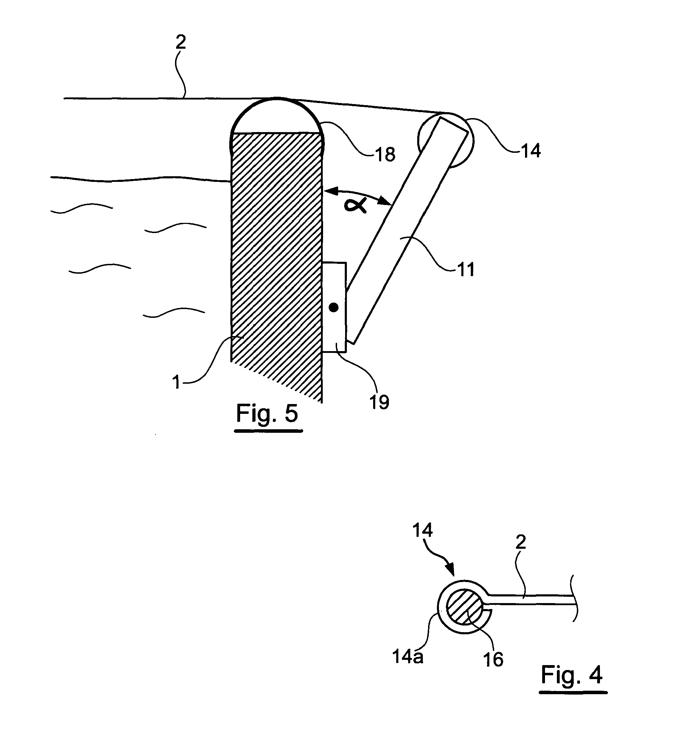

En référence à la figure 3, une bâche 2 est représentée en vue du dessus. Cette bâche 2 est réalisée en PVC et présente une forme plane. Elle est munie en son centre d'un dispositif 12 d'évacuation des eaux de pluie qu'elle est amenée à recueillir, et à sa périphérie d'une trappe 13 permettant le passage d'un opérateur vers l'intérieur du bassin. Cette bâche présente sur son pourtour 14 une pluralité d'encoches 15 délimitant des portions de pourtour 14a. Chaque portion de pourtour 14a est équipée d'un jonc. Ce jonc 16 est représenté à la figure 4. Chaque portion de pourtour 14a de la bâche 2 peut ainsi être insérée dans la gorge 6 d'un tambour 4.

Lorsque toutes les portions de pourtour 14a de la bâche 2 sont ainsi positionnées dans les gorges 6, les moyens de mise en rotation 5 des tambours peuvent être actionnés par exemple grâce à un outil adapté 17, visible sur la figure 2, pour mettre en rotation les tambours associés et ainsi tendre la bâche 2. Cette mise en tension implique d'agir successivement sur les différents moyens 5 de mise en rotation des tambours pour chaque moyen 3.

En référence à la figure 5, la bâche 2 peut être ainsi tendue au-dessus du bassin 1. Avantageusement, le bord supérieur de celui-ci est équipé d'un élément de protection 18 sur lequel repose la bâche 2. Ceci permet d'éviter à cette bâche d'être en contact direct avec le bassin 1, et ainsi de s'user par frottement. L'élément de protection 18 peut par exemple être constitué par un boudin en matériau caoutchouc.

Comme on peut le voir sur la figure 5, chaque potelet 11 est monté sur le bassin 1 par l'intermédiaire d'une pièce 19 permettant son articulation. De tels potelets permettent, en réglant leur inclinaison α par rapport au bassin 1, de rapprocher plus ou moins les tambours 4 du bassin et ainsi de jouer sur la surface effective de la bâche.

La bâche représentée en référence à ce mode de réalisation peut s'adapter à un bassin de 15 mètres plus ou moins 70 cm grâce au système selon l'invention qui permet de jouer sur l'enroulement des tambours et/ou sur l'angle α entre les potelets 11 et le pourtour la du bassin 1.

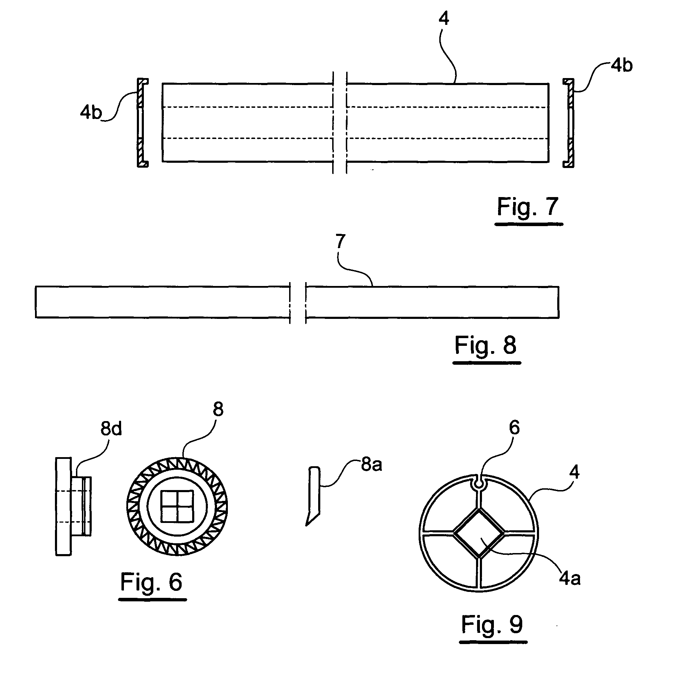

En référence aux figures 7 à 9, chaque moyen formant tambour est constitué d'un tambour 4 présentant un passage intérieur longitudinal 4a de section sensiblement carrée et, sur sa périphérie extérieure, d'une gorge 6. Des protections 4b en matière plastique sont prévues emboîtables sur les extrémités du tambour 4 afin d'empêcher la corrosion des parties intérieures de celui-ci. Les moyens de mise en rotation de ce tambour incluent un axe longitudinal 7 de section carrée apte à être introduit dans le passage intérieur 4a, et conçu pour coopérer avec un dispositif à rochet et à cliquet dont on peut voir les éléments en figure 6. Ces éléments incluent un rochet 8 pourvu de dents et d'une partie 8a susceptible d'être actionnée avec un outil approprié pour faire tourner le rochet 8 et ainsi entraîner le tambour 4 en rotation, cette rotation pouvant être bloquée grâce à un cliquet 8a.

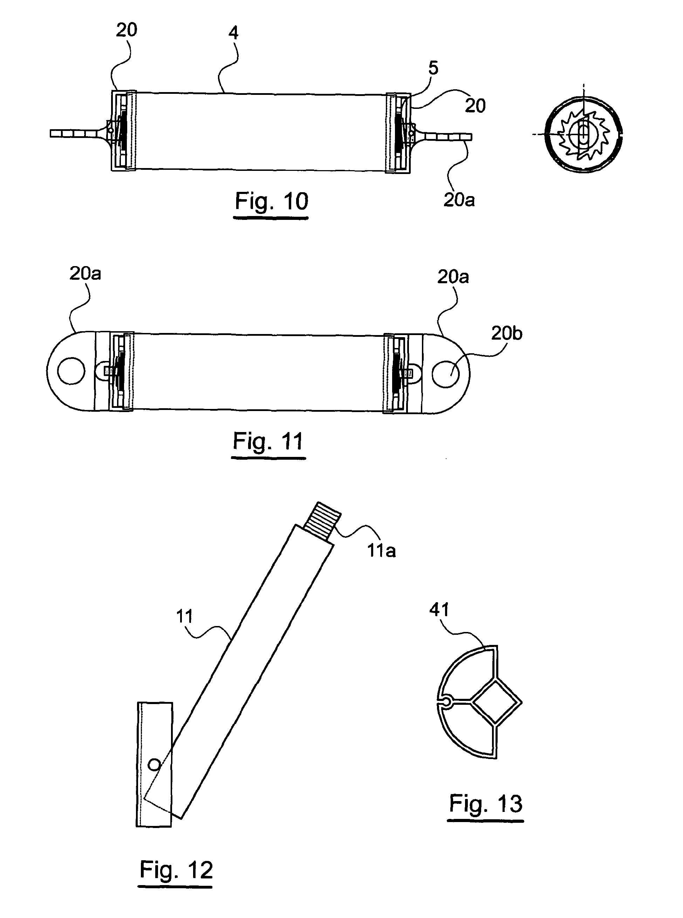

En référence aux figures 10 et 11, un autre mode de réalisation des tambours 4 et des moyens 5 de mise en rotation de celui-ci est représenté.

Selon ce mode de réalisation, le tambour 4 est équipé de part et d'autre de supports latéraux 20 présentant des oreilles 20a pourvues d'orifices 20b. Ces orifices 20b peuvent être utilisés pour accueillir un autre mode de réalisation des potelets représenté à la figure 12. Ce type de potelet 11 présente une extrémité supérieure 11a filetée, spécialement conçue pour coopérer avec les orifices 20b des oreilles 20a des tambours 4.

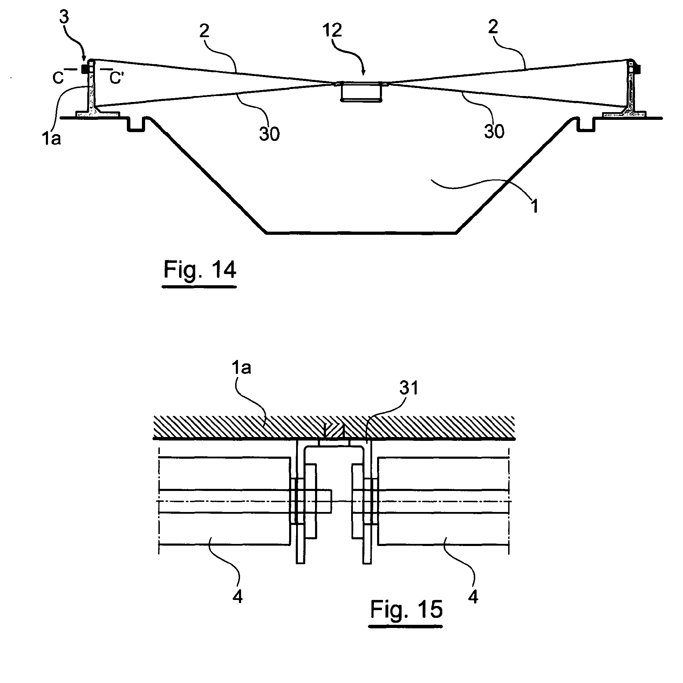

Selon le mode de réalisation représenté à la figure 14, l'installation représentée en coupe comprend un bassin 1 rectangulaire et un système de bâche selon la présente invention.

Ce système comprend une bâche essentiellement rectangulaire 2 équipée en son centre d'un dispositif 12 d'évacuation des eaux de pluie qu'elle recueille et une pluralité de moyens 3 de mise en tension de cette bâche 2.

Des câbles 30 relient la bâche 2 à la base de la structure constituant le pourtour du bassin afin de concourir au maintien de celle-ci.

Ces moyens de mise en tension incluent des moyens 3 formant tambour prévus de façon telle que les tambours 4 soient disposés essentiellement parallèlement au pourtour du bassin. La structure de ces tambours et des moyens permettant leur mise en rotation est essentiellement la même que celle donnée précédemment.

Dans ce mode de réalisation, les moyens de mise en tension de la bâche 2 sont fixés au pourtour du bassin non par des potelets mais par des platines 31 présentant une section en U telle que représentée sur la figure 15. Ces platines sont solidarisés par des moyens adéquats au pourtour 1a du bassin.

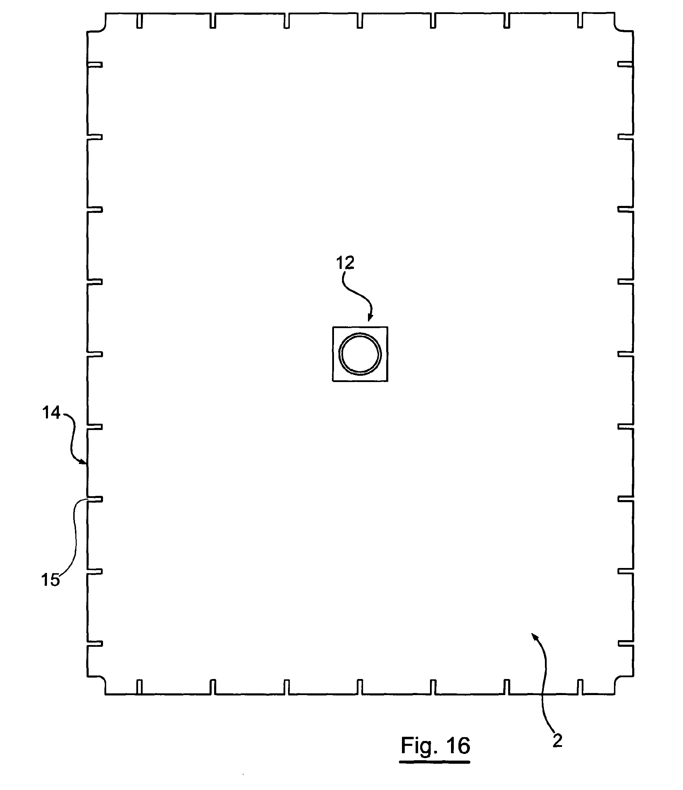

En référence à la figure 16, la bâche destinée à l'installation selon la figure 14 est rectangulaire et présente sur son pourtour 14 une pluralité d'encoches 15 délimitant des portions 14a de pourtour destinés à coopérer avec les tambours 4.

On notera que, bien que les présents modes de réalisation soit donnés en référence à un bassin circulaire et à un bassin rectangulaire, la présente invention pourra être mise en oeuvre pour tout type de bassin quelle que soit sa forme et sa taille.

On notera également que si les moyens 3 présentent des tambours 4, il pourrait être aussi envisagé d'utiliser des moyens 3 pourvus de parties de tambour 4', c'est-à-dire présentant une section en arc de cercle, comme représenté à la figure 13. En effet, la surface d'enroulement des moyens 3 peut être constituée par seulement une portion de tambour sans sortir du cadre de l'invention.

La présente invention permet, en agissant sur les moyens de mise en rotation associé à chaque tambour 4, de tendre la bâche de façon uniforme et efficace. La mise en tension de la bâche peut être ainsi progressive et uniformément répartie.

On notera aussi que le système permet d'utiliser une bâche donnée pour des bassins de tailles légèrement variables, puisque l'ensemble des moyens de mise en tension peuvent, grâce au tambour 4, réduire sensiblement la surface effective de cette bâche

## Revendications

1. Système de bâche pour bassin (1) incluant au moins une bâche (2) et des moyens de mise en tension de ladite bâche au-dessus dudit bassin **caractérisé en ce que** lesdits moyens de mise en tension incluent une pluralité de moyens (3) formant tambours ou parties de tambours rotatifs présentant chacun un tambour (4) ou une partie de tambour muni(e) de moyens de coopération avec au moins une partie du pourtour de ladite bâche et des moyens (5) de mise en rotation dudit tambour ou de ladite partie de tambour.

2. Système selon la revendication 1 **caractérisé en ce que** lesdits moyens (3) formant tambours ou parties de tambours rotatifs sont répartis essentiellement sur tout le pourtour (14) de la bâche.

3. Système selon la revendication 2 **caractérisé en ce que** lesdits moyens (3) formant tambours ou parties de tambours sont répartis essentiellement uniformément sur tout le pourtour (14) de la bâche

4. Système de bâche pour bassin selon l'une quelconque des revendications précédentes **caractérisé en ce que** chaque tambour (4) ou partie de tambour est pourvu(e) d'au moins une gorge (6) longitudinale apte à recevoir ladite au moins une partie du pourtour de ladite bâche.

5. Système de bâche pour bassin selon la revendication 4 **caractérisé en ce que** ledit pourtour (14) de ladite bâche est pourvu d'au moins un jonc (16) conçu pour coopérer avec ladite au moins une gorge longitudinale.

6. Système de bâche pour bassin selon l'une quelconque des revendications précédentes **caractérisé en ce que** lesdits moyens (5) de mise en rotation de chaque tambour ou partie de tambour incluent un dispositif à rochet (8) et cliquet (8a).

7. Système de bâche pour bassin selon l'une quelconque des revendications précédentes **caractérisé en ce qu'**il comprend des moyens de fixation desdits moyens de mise en tension de ladite bâche sur un bassin.

8. Système selon la revendication 7 **caractérisé en ce que** ledit moyens de fixation incluent une pluralité de platines (31).

9. Système selon la revendication 7 **caractérisé en ce que** lesdits moyens de fixation incluent une pluralité de potelets (11).

10. Système selon l'une quelconque des revendications précédentes **caractérisé en ce que** le pourtour de ladite bâche présente des entailles (15) délimitant des portions (14a) de pourtour coopérant avec les gorges desdits tambours ou parties de tambour.

11. Bâche (2) pour système selon la revendication 10 **caractérisée en ce qu'**elle présente des entailles (15) sur son pourtour (14) délimitant des portions de pourtour (14a) de bâche.

12. Bâche (2) selon la revendication précédente **caractérisée en ce que** chaque portion de pourtour de bâche présente un jonc (16).

13. Installation constituée d'un bassin (1) et d'un système de bâche selon l'une quelconque des revendications 1 à 10.

14. Installation selon la revendication 13 **caractérisée en ce que** lesdits moyens (3) formant tambours ou parties de tambours rotatifs sont prévus essentiellement parallèlement au pourtour (1a) ou à une partie du pourtour dudit bassin (1).

15. Installation selon l'une des revendications 13 ou 14 **caractérisée en ce que** lesdits moyens (3) formant tambours ou parties de tambours sont répartis sur l'ensemble du pourtour (1a) dudit bassin (1).

16. Installation selon la revendication précédente **caractérisée en ce que** lesdits moyens (3) formant tambours ou parties de tambours sont répartis essentiellement uniformément sur l'ensemble du pourtour (1a) dudit bassin.

17. Installation selon l'une quelconque des revendications 13 à 16 **caractérisée en ce qu'**elle inclut des moyens de fixation des moyens de mise en tension de la bâche fixés sur la paroi extérieure ou sur le rebord dudit bassin (1).

18. Installation selon la revendication précédente **caractérisée en ce qu'**elle présente une pluralité de platines (31) de fixation accueillant lesdits moyens (3) formant tambour ou partie de tambour, lesdites platines étant fixées à la paroi extérieure dudit bassin.

19. Installation selon la revendication 17 **caractérisée en ce qu'**elle présente une pluralité de potelets (11) dont les extrémités inférieures sont fixées à la paroi extérieure dudit bassin et dont les extrémités supérieures sont reliées aux moyens (3) formant tambours ou parties de tambours.

20. Installation selon la revendication 19 **caractérisé en ce que** lesdits potelets (11) sont montés articulés sur ledit bassin.

21. Installation selon l'une des revendications 13 à 20 **caractérisée en ce que** le rebord dudit bassin est équipé d'un élément de protection (18).
